# EUROPÄISCHE PATENTANMELDUNG

(11) **EP 1 174 586 A1**
(43) Veröffentlichungstag der Anmeldung: **23.01.2002**
(21) Anmeldenummer: 00810639.5
(22) Anmeldetag: 19.07.2000
(51) Int. Cl.: F01D 5/08, H02K 1/32, H02K 1/20

(54) **Kühlkanäle für einen Rotor einer Kraft- und/oder Arbeitsmaschine**

(71) Anmelder: ABB Industrie AG, 5400 Baden (CH)
(72) Erfinder: Jakoby, Ralf, Dr., 5224 Unterbözberg (CH); Popp, Oliver, 5442 Fislisbach (CH); von Wolfersdorf, Jens, Dr., 5417 Untersiggenthal (CH)
(74) Vertreter: ABB Patent Attorneys

(57) **Zusammenfassung**

Die vorliegende Erfindung offenbart einen Rotor (1) für eine Kraft- oder Arbeitsmaschine mit einer Vielzahl axial nach aussen austretender Ansaugkanäle (5) für Rotorkühlluft. Im Bereich des axialen Austritts der Ansaugkanäle (5) bilden deren Innenwandungen jeweils sich nach aussen hin erweiternde trichterförmige Einlaufbereiche (8) aus, die sich in eine gemeinsame sich radial erstreckende Stirnfläche (9) öffnen. Die Übergänge von den Innenwandungen der Ansaugkanäle (5) in die Einlaufbereiche (8) sowie von den Einlaufbereichen (8) in die gemeinsame Stirnfläche (9) sind fliessend ausgestaltet zur Vermeidung scharfer Übergangskanten. Hierdurch lässt sich die Kühlung des Rotors (1) gegenüber Rotoren ähnlicher Bauweise deutlich verbessern.

## Beschreibung

### Technisches Gebiet

Die vorliegende Erfindung betrifft einen Rotor für eine Kraft- und/oder Arbeitsmaschine sowie die Verwendung des Rotors gemäss den Oberbegriffen der unabhängigen Patentansprüche.

### Stand der Technik

Bei vielen rotatorischen Kraft- und Arbeitsmaschinen ist es erforderlich, während dem Betrieb an bestimmten Stellen kontinuierlich Wärme abzuführen, damit zulässige Bauteiltemperaturen und Toleranzen eingehalten werden können. Bei den Rotoren dieser Maschinen geschieht dieses bevorzugterweise dadurch, dass eine Kühlmediumströmung durch den Rotor hindurch erzeugt wird, welche üblicherweise axial in den Rotor eintritt und durch im Rotor angeordnete Kühlkanäle radial nach aussen hin austritt und dabei Wärme von den zu kühlenden Rotorteilen aufnimmt und abführt. Da viele dieser Maschinen nicht über separate Kühlmediumpumpen, wie z.B. separate Kühlluftgebläse, verfügen, sondern das Kühlmedium durch Eigenventilation des Rotors angesaugt werden muss, sind die erzielbaren Kühlleistungen und damit die Leistungsfähigkeit bzw. Lebensdauer solcher Maschinen unbefriedigend.

### Darstellung der Erfindung

Es stellt sich daher die Aufgabe einen Rotor für eine Kraft- oder Arbeitsmaschine mit verbesserter Kühlfähigkeit zur Verfügung zu stellen.

Diese Aufgabe wird vom dem Rotor gemäss Anspruch 1 gelöst.

Demgemäss weist der Rotor für eine Kraftmaschine (z.B. eine Gasturbine oder ein Elektromotor) oder eine Arbeitsmaschine (z.B. ein Verdichter oder ein Generator) oder für eine Kombination aus beiden Maschinentypen einen oder mehrere axial an einer oder an beiden seiner Stirnseiten nach aussen austretende Ansaugkanäle zum Ansaugen eines Kühlmediums auf. Die Mündungsöffnungen sind von der Rotationsachse des Rotors beabstandet angeordnet, so dass diese auf einer oder mehreren Kreisbahnen um die Achse des Rotors herum rotieren. Die Innenwandungen der Ansaugkanäle bilden jeweils einen sich nach aussen hin öffnenden trichterförmigen Einlaufbereich aus, welcher sich in eine im wesentlichen radial vom Rotorenzentrum aus erstreckende Stirnfläche hin öffnet. Trichterförmig bedeutet, dass sich der Querschnitt des Ansaugkanals im diesem Bereich in axialer Richtung nach aussen hin zunehmend vergrössert, was z.B. dann der Fall ist, wenn die Innenwandungen des Einlaufbereichs einen Kegel, eine Pyramide oder eine Art Trompete umschliessen, deren grösster Querschnitt in der Ebene der Stirnfläche liegt. Die Querschnitte können rotationssymmetrisch, symmetrisch oder auch asymmetrisch sein. Weist der Rotor mehrere Ansaugkanälen auf, so münden diese bevorzugterweise in eine gemeinsamen Stirnfläche ein. Es ist jedoch ebenso denkbar, dass die Ansaugkanäle gruppenweise jeweils in gemeinsame Stirnflächen einmünden oder jeder Ansaugkanal in eine eigene Stirnfläche einmündet, wobei diese Stirnflächen in gleichen oder verschiedenen Ebenen liegen können. Der Übergang der Innenwandung des jeweiligen Ansaugkanals in den trichterförmigen Einlaufbereich desselben und/oder vom trichterförmigen Einlaufbereich in die Stirnfläche ist bei einem Teil oder bei allen Ansaugkanälen fliessend ausgestaltet, d.h. dass die jeweiligen Flächen ohne Bildung von Kanten ineinander übergehen. Lediglich in Bereichen, in denen die Einlaufbereiche zweier nebeneinander liegender Ansaugkanäle direkt ineinander übergehen, sind Übergangskanten zwischen diesen Einlaufbereichen vorgesehen, welche die Strömung des angesaugten Mediums in die Teilströme, welche in die einzelnen Ansaugkanäle eintreten, aufteilen. Es hat sich gezeigt, dass hierdurch die Kühlung des Rotors gegenüber Rotoren ähnlicher Bauweise deutlich verbessert werden kann, wodurch bei gleicher Maschinenleistung infolge abgesenkter Bauteiltemperaturen höhere Lebensdauern oder bei gleicher Lebensdauer grössere Maschinenleistungen erzielt werden können.

Der Einlaufbereich wird mit Vorteil als trompetenförmiger Trichter ausgebildet, derart, dass dessen Innenwandung in Radialschnitten bezogen auf seine zentrale Achse Bögen mit konstantem oder nach aussen hin abnehmendem Radius beschreibt, also Kreisbögen oder elliptische Bögen, deren Dimensionen im Falle eines rotationssymmetrischen Einlaufbereichs über seinen gesamten Umfang gesehen gleich bleiben oder aber sich bei nicht rotationssymmetrischen bzw. asymmetrischen Einlaufbereichen über den Umfang gesehen verändern können. Ausserdem ist es denkbar, dass sich die Grundform dieser Wandkonturen über den Umfang gesehen verändert, z.B. von kreisbogenförmig in elliptisch. Zudem ist es vorgesehen, den Einlaufbereich derartig auszubilden, dass sich dieser an verschiedenen Positionen seines Umfangs von der von der sich radial erstreckenden Stirnfläche gebildeten Ebene aus gesehen axial unterschiedlich weit in den Ansaugkanal hinein erstreckt und/oder sich von seinem Zentrum aus gesehen unterschiedlich weit radial in diese Stirnfläche hinein erstreckt. Hierdurch lässt sich, auch bei gegebenen Anordnungen und beschränkten Platzverhältnissen, eine vorteilhafte Einlaufkontur mit harmonischen Übergängen der Flächen ineinander realisieren, wodurch einer in die Ansaugkanäle einströmenden Kühlmediumströmung nur ein geringer Widerstand entgegensetzt wird.

In einer bevorzugten Ausführung erstreckt sich der Einlaufbereich an denjenigen Positionen an seinem Umfang, welche auf einer Radiallinie liegen, die vom Rotorenzentrum durch sein Zentrum führt, also die dem Rotorenzentrum am nächsten und am entferntesten sind, weniger weit radial vom Zentrum des Einlaufbereichs in die Stirnfläche hinein als an Positionen an seinem Umfang, welche auf einer Senkrechten zu dieser Radiallinie, die durch sein Zentrum führt, liegen. Gleichzeitig oder alternativ erstreckt sich der Einlaufbereich in den erstgenannten Bereichen weniger weit axial in den Ansaugkanal hinein als in den letztgenannten Bereichen.

Besonders bevorzugt ist es, wenn die Einlaufbereiche der Ansaugkanäle von durch Selbstventilation gekühlten Rotoren, welche mit radialen Kühlkanälen im Rotor in Verbindung stehen und sich vorteilhafterweise durch den gesamten Rotor hindurch erstrecken, in der zuvor genannten Weise ausgestaltet werden. Insbesondere bei Rotoren von elektrischen Kraft- und Arbeitsmaschinen mit Rotorwicklungen ist diese Ausgestaltung vorteilhaft, da hierdurch die Kühlleistung deutlich gesteigert werden kann. Ein solcher Rotor eignet sich besonders für die Verwendung in einer gasgekühlten Maschine, wobei das Kühlgas aus einem geschlossenen Kreislauf mit Wärmetauschern (z.B. ein geschlossener Wasserstoffkreislauf) oder aus der Umgebung (Luft) angesaugt werden kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Hälfte eines Elektromotorenrotors teilweise im Schnitt dargestellt;
Fig. 2 eine perspektivische Draufsicht von schräg oben auf ein Einlaufelement des Rotors von Fig. 1;
Fig. 3 eine Draufsicht auf das Einlaufelement aus Fig. 2;
Fig. 4 einen Schnitt entlang der Linie A-A in Fig. 3; und
Fig. 5 einen Schnitt entlang der Linie B-B in Fig. 3.

### Wege zur Ausführung der Erfindung

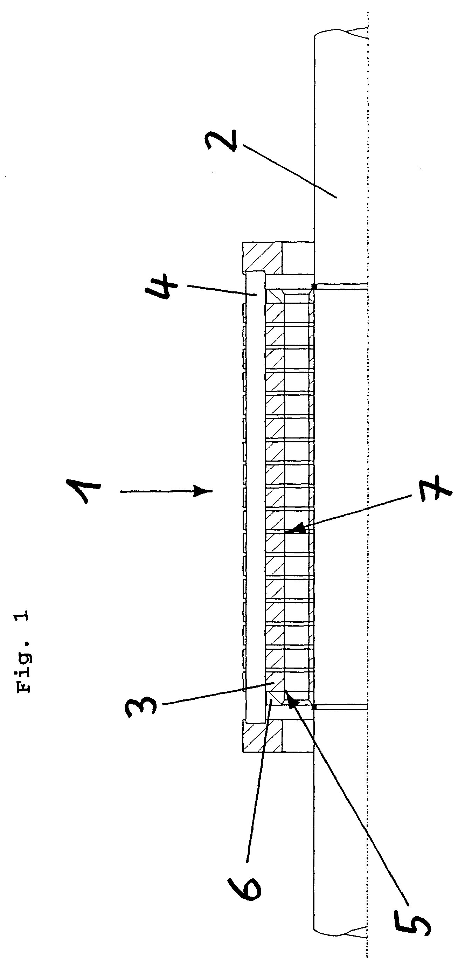

Eine bevorzugte Ausführung der Erfindung ist in Fig. 1 dargestellt. Die Zeichnung zeigt eine Hälfte eines luftgekühlten Elektromotorenrotors 1 teilweise im Schnitt. Wie zu erkennen ist, umfasst der Rotor 1 die Rotorenwelle 2 (nicht geschnitten dargestellt), die Blechpackete 3 und die Rotorwicklungsstäbe 4. Der Rotor ist selbstventilierender Bauart und weist Ansaugkanäle 5 auf, welche durch die stirnseitigen Einlaufelemente 6 hindurch axial nach aussen ausmünden. Die Ansaugkanäle 5, welche dem Ansaugen von Kühlluft dienen, erstrecken sich in axialer Richtung durch die Blechpackete 3 hindurch und stehen in Verbindung mit im Rotor 1 angeordneten radialen Kühlkanälen 7. Wird der Rotor 1 in Rotation versetzt, so wird infolge Fliehkraft Kühlluft in den axial zwischen den Blechpacketen 3 angeordneten radialen Kühlkanälen 7 radial nach aussen gefördert, wodurch ein Unterdruck in den Ansaugkanälen 5 entsteht und somit eine Kühlluftströmung erzeugt wird, welche axial in die Ansaugkanäle 5 hinein eintritt und radial aus den Kühlkanälen 7 hinaus austritt.

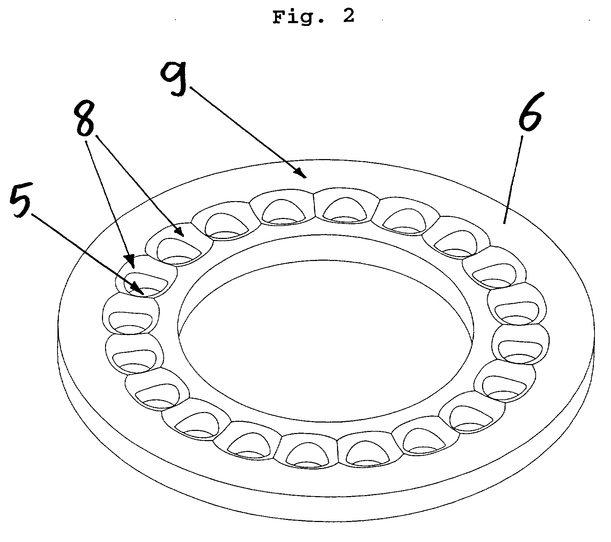

Wie aus Fig. 2 zu ersehen ist, welche ein Einlaufelement 6 des Rotors 1 perspektivisch in einer Draufsicht zeigt, sind die Ansaugkanäle 5 im Einlaufelement 6 derartig ausgestaltet, dass sich ihre Innenwandungen nach aussen hin über einen trichterförmigen Einlaufbereich 8 in die, sich bezogen auf die Rotorendrehachse radial erstreckende, gemeinsame Stirnfläche 9 des Einlaufelements 6 öffnen.

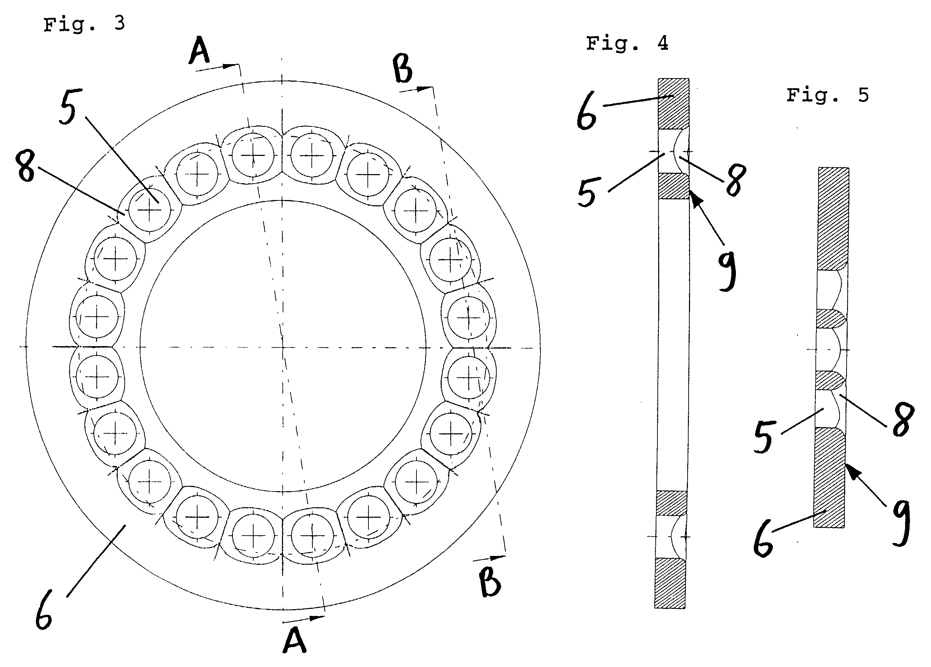

Fig. 3 zeigt eine stirnseitige Draufsicht auf das Einlaufelement 6, und die Figuren 4 und 5 einen Schnitt entlang der Linien A-A bzw. B-B in Fig. 3. Wie aus diesen Figuren zu erkennen ist, weisen die Ansaugkanäle 5 im Bereich ihres Übergangs in den Einlaufbereich 8 einen kreisrunden Querschnitt auf. Die Innenwandungen der Ansaugkanälen 5 gehen fliessend und ohne Übergangskanten in ihre trichterförmigen Einlaufbereiche 8 und von dort aus fliessend in die Stirnfläche 9 über, wodurch eventuelle, die Strömung beeinträchtigende Kanten vermieden werden. Die Innenwandungen der Einlaufbereiche 8 sind im dargestellten Fall trompetenartig ausgeformt und zwar derart, dass sie im Radialschnitt bezogen auf ihr Zentrum gesehen, an jeder ihrer Umfangspositionen von einem Bogen mit einem konstantem Radius, also von einem Kreisbogen, gebildet werden, wobei der Radius über den Umfang des jeweiligen Einlaufbereichs 8 gesehen variiert. Hierdurch erstrecken sich die Einlaufbereiche 8 an unterschiedlichen Positionen an ihrem Umfang einmal mehr und einmal weniger weit axial in die Ansaugkanäle 5 und radial in die Stirnfläche 9 hinein. In den Bereichen, in denen die Einlaufbereiche 8 nebeneinander angeordneter Ansaugkanäle 5 aneinander angrenzen, existiert im dargestellten Fall keine Stirnfläche 9. Die Einlaufbereiche 8 gehen hier direkt ineinander über.

Wie des Weiteren zu erkennen ist, erstrecken sich die Einlaufbereiche 8 der Ansaugkanäle 5 an denjenigen ihrer Umfangspositionen, die auf einer Radiallinie liegen, welche vom Rotorenzentrum durch ihr Zentrum geht (z.B. Schnittlinie A-A), radial weniger weit von ihrem Zentrum aus in die Stirnfläche 9 hinein als an denjenigen ihrer Umfangspositionen, welche auf einer Senkrechten (z.B. Schnittlinie B-B) zu der zuvor beschriebenen Radiallinie, die durch ihr Zentrum geht, liegen.

Auch wenn im vorliegenden Beispiel die Innenkonturen der Einlaufbereiche 8 im Radialschnitt bezogen auf das Zentrum des jeweiligen Einlaufbereichs 8 gesehen kreisbogenförmig ausgebildet sind, so ist es ebenso vorgesehen, diese über den Umfang gesehen ganz oder teilweise ellipsenförmig auszubilden. Auch ist es denkbar, den Einlaufbereich 8 als Kegel mit fliessenden Übergängen zu den angrenzenden Flächen auszuführen, an Stelle der dargestellten Form eine rotationssymmetrische Form des Einlaufbereichs 8 zu wählen oder die Einlaufbereiche 8 nebeneinander angeordneter Ansaugkanäle 5 derartig auszugestalten, dass sich diese nicht berühren, sondern der Bereich zwischen denselben von der Stirnfläche 9 gebildet wird und die Einlaufbereiche 8 auch in diesem Bereich fliessend in die Stirnfläche 9 übergehen.

### Bezugszeichenliste

- 1: Rotor
- 2: Rotorenwelle
- 3: Blechpacket
- 4: Rotorwicklungsstab
- 5: Ansaugkanal
- 6: Einlaufelement
- 7: radialer Kühlkanal
- 8: trichterförmiger Einlaufbereich
- 9: Stirnfläche

## Patentansprüche

1. Rotor einer Kraft- und/oder Arbeitsmaschine mit einem oder mehreren axial nach aussen hin ausmündenden Ansaugkanälen (5) zum Ansaugen eines Kühlmediums, deren Mündungsöffnungen beabstandet von der Rotationsachse des Rotors (1) angeordnet sind und deren Innenwandungen sich im Bereich der Mündung nach aussen hin über einen trichterförmigen Einlaufbereich (8) in eine im wesentlichen radial erstreckende Stirnfläche (9) öffnen, **dadurch gekennzeichnet, dass** bei einem Teil oder bei allen Ansaugkanälen (5) der Übergang von der Innenwandung in den Einlaufbereich (8) und/oder vom Einlaufbereich (8) in die Stirnfläche (9) fliessend ausgestaltet ist zur Vermeidung von Übergangskanten.

2. Rotor nach Anspruch 1, **dadurch gekennzeichnet, dass** die Ansaugkanäle (5) im Bereich ihres Übergangs in den Einlaufbereich (8) einen im wesentlichen runden, insbesondere kreisrunden, Querschnitt aufweisen.

3. Rotor nach einem der vorangehenden Ansprüche, **dadurch gekennzeichnet, dass** der Einlaufbereich (8) trompetenartig ausgeformt ist, derart, dass dessen Innenwandung im Radialschnitt bezogen auf dessen Zentrum gesehen an verschiedenen Positionen am Umfang desselben gleiche oder verschiedene Bögen mit jeweils konstantem Radius und/oder mit axial nach aussen hin abnehmendem Radius beschreibt.

4. Rotor nach einem der vorangehenden Ansprüche, **dadurch gekennzeichnet, dass** sich der Einlaufbereich (8) an verschiedenen Positionen an seinem Umfang axial unterschiedlich weit in den Ansaugkanal (5) hinein erstreckt und/oder von seinem Zentrum aus radial unterschiedlich weit in die Stirnfläche (9) hinein erstreckt.

5. Rotor nach Anspruch 4, **dadurch gekennzeichnet, dass** sich der Einlaufbereich (8) an denjenigen Positionen an seinem Umfang, welche auf einer Radiallinie (A-A) liegen, die vom Rotorenzentrum durch sein Zentrum führt, weniger weit radial vom seinem Zentrum in die Stirnfläche (9) hinein und/oder weniger weit axial in den Ansaugkanal (5) hinein erstreckt als an Positionen an seinem Umfang, welche auf einer Senkrechten (B-B) zu dieser Radiallinie (A-A) liegen, die durch sein Zentrum führt.

6. Rotor nach einem der vorangehenden Ansprüche, **dadurch gekennzeichnet, dass** dieser Rotor (1) ein durch Selbstventilation gekühlter Rotor (1) ist welcher derartig ausgestaltet ist, dass die Ansaugkanäle (5) mit radialen Kühlkanälen (7) im Rotor (1) in Verbindung stehen, und insbesondere, dass sich die Ansaugkanäle (5) axial durch den Rotor (1) hindurch erstrecken.

7. Rotor nach Anspruch 6, **dadurch gekennzeichnet, dass** dieser ein Rotor (1) für eine elektrische Kraft- und/oder Arbeitsmaschine ist, welcher Rotorwicklungen (4) aufweist.

8. Verwendung des Rotors (1) nach einem der vorangehenden Ansprüche in einer gasgekühlten, insbesondere luftgekühlten, Kraft- und/oder Arbeitsmaschine, insbesondere in einem elektrischen Generator und/oder Motor.
